# EUROPÄISCHE PATENTSCHRIFT

(11) **EP 0 806 376 B1**
(45) Veröffentlichungstag und Bekanntmachung des Hinweises auf die Patenterteilung: **23.05.2001**
(21) Anmeldenummer: 96250210.0
(22) Anmeldetag: 25.09.1996
(51) Int. Cl.: B65G 13/075, B65G 47/26

(54) **Rollenbahn mit Tragrollen für das Fördergut**
Roller-conveyer with support rollers for the conveyed goods
Transporteur à rouleaux avec rouleaux supports pour les objets transportés

(30) Priorität: 06.05.1996 DE 19619097; 08.07.1996 DE 19628711
(43) Veröffentlichungstag der Anmeldung: 12.11.1997
(73) Patentinhaber: Atecs Mannesmann AG, 40213 Düsseldorf (DE)
(72) Erfinder: Bonifer, Edgar, Ing. (grad.), 64839 Münster (DE); Jahns, Werner, Dipl.-Ing., 63500 Seligenstadt (DE); Kratz, Helmut, 63110 Rodgau (DE)
(74) Vertreter: Meissner, Peter E., Dipl.-Ing.

(56) Entgegenhaltungen:
- EP-A- 0 640 540
- AT-A- 384 595
- DE-A- 2 550 143
- DE-A- 3 418 205
- DE-C- 3 817 388
- FR-A- 2 537 104

## Beschreibung

Die Erfindung betrifft eine Rollenbahn mit Tragrollen für das Fördergut gemäß dem Oberbegriff des Anspruchs 1.

Aus der deutschen Patentschrift DE 38 17 388 C1 ist eine Staurollenbahn bekannt, deren Tragrollen zum staudrucklosen Fördern von Fördergut abschnittsweise antreib-bzw. stillsetzbar sind. Der Antrieb erfolgt über einen endlos umlaufenden und in Förderrichtung verlaufenden Flachriemen, dessen Obertrum zur Übertragung der Antriebskräfte über Stützrollen von unten an die Tragrollen angedrückt werden kann. Hierzu sind die Stützrollen exzentrisch gelagert und jeweils in Förderrichtung gesehen im Bereich zwischen den mit Abstand aufeinanderfolgenden Tragrollen angeordnet, so daß im Antriebszustand die Stützrollen derart weit angehoben werden können, daß eine geringe Umschlingung der Tragrollen durch den Flachriemen erfolgt. Die Hubbewegung der Stützrolle erfolgt durch Verdrehung der exzentrischen Lagerung über einen hierzu radial angeordneten Hebel. Die Hebel eines Abschnittes der Staurollenbahn sind jeweils an einer gemeinsamen Betätigungsleiste angelenkt, die über einen Pneumatikzylinder in bzw. gegen die Förderrichtung der Staurollenbahn verschiebbar sind, um somit die Stützrollen eines Abschnittes gemeinsam anzuheben oder abzusenken.

Das Abbremsen der Rollen erfolgt über einen Bremsgurt, der parallel zu dem Antriebsgurt verläuft und an seinen Enden fest eingespannt ist. Für ein Abbremsen der Tragrollen wird der Bremsgurt in entsprechender Weise wie der Antriebsgurt über weitere Stützrollen von unten an die Tragrollen angedrückt. Die Stützrollen für den Brems- und Antriebsgurt sind auf einer gemeinsamen Welle derart exzentrisch gelagert, daß je nach Stellung des Hebels entweder die Stützrolle für den Antriebsgurt oder die Stützrolle für den Bremsgurt sich im angehobenen bzw. abgesenkten Zustand befinden.

Diese Antriebsart für die Staurollenbahnabschnitte hat sich bei einer Vielzahl von Einsatzfällen bewährt. Es können jedoch Probleme auftreten, wenn Fördergüter mit hohem Gewicht in kurzer Zeit abgebremst und zusätzlich gleichzeitig mehrere Staurollenbahnabschnitte stillgesetzt werden sollen, da über hierdurch hervorgerufene Dehnungen im Bremsgurt eine Verlängerung des Bremsweges auftreten kann. Ferner ist aus der deutschen Offenlegungsschrift die DE 44 09 968 A1 ein Bausatz zum Bremsen von Tragrollen von Rollenförderern bekannt. Dieser Bausatz soll sich zum nachträglichen Einbau in bereits bestehende Rollenförderer mit antreibbaren und frei drehenden Tragrollen, insbesondere von Staurollenförderem eignen und besteht im wesentlichen aus Bremslamellen zum Abbremsen der Tragrollen. Die Bremslamelle ist hierzu jeweils auf einen verschwenk- oder verschiebbaren Lamellenhalter befestigt, der auf das in oder außer Eingriff mit der jeweiligen Tragrolle bringbare Antriebsmittel montiert ist.

Des weiteren ist in der deutschen Patentschrift DE 37 38 587 C2 eine Staurollenbahn beschrieben, deren Tragrollen gemeinsam bzw. gruppenweise angetrieben sind und jeder Tragrolle eine eigene Bremsvorrichtung zugeordnet ist. Diese Bremsvorrichtung besteht im wesentlichen aus einem Bremsbelag, der auf einem Bremsbelagträger angeordnet ist. Der Bremsbelag weist durchgehend eine gleiche Materialstärke auf und ist entsprechend dem Krümmungsradius der Tragrollen ausgebildet. Der Bremsbelagträger mit dem Bremsbelag ist über ein Betätigungselement in Richtung der Tragrolle anstellbar.

Ferner ist aus der französischen Patentanmeldung FR 2 537 104 A1 eine weitere Staurollenbahn bekannt, die je angetriebenen Staurollenabschnitt für eine der Tragrollen eine Bremsvorrichtung aufweist. Diese Bremsvorrichtung ist im Wesentlichen aus einem Bremsbelag aufgebaut, der sich an einem Tragelement abstützt, das zum Anlegen des Bremsbelages an die Oberfläche der Tragrolle sowie gleichzeitig in Umlaufrichtung der Tragrolle anstellbar ist. Der Bremsbelag wird hierbei durch die Drehbewegung der Tragrolle sowie die Anstellbewegung des Tragelementes gestaucht.

Der vorliegenden Erfindung liegt die Aufgabe zugrunde, eine Rollenbahn mit Bremselementen zu schaffen, die eine optimierte Bremsleistung bietet.

Diese Aufgabe wird bei einer Rollenbahn mit bremsbaren Tragrollen für das Fördergut durch die im Anspruch 1 aufgeführten Merkmale gelöst. Vorteilhafte Ausgestaltungen der Erfindung sind in den Unteransprüchen 2 bis 14 angegeben.

Durch die Führung der Bremselemente zum Abbremsen der Tragrollen der Staurollenbahn auf einer vorgegebenen Bewegungsbahn, die mindestens in der letzten weitgehend tangential zur Oberfläche der Tragrollen sowie in deren Drehrichtung erfolgenden Phase zu einer Stauchung der Bremselemente zwischen der Oberfläche der Tragrolle und dem Tragelement führt, wird erreicht, daß sich die Bremselemente von den Tragrollen durch Reibschluß mitgenommen und auf dem Tragelement abstützend in dem Spalt zwischen der Tragrollenoberfläche und dem Tragelement verkeilen und somit der Anpreßdruck des Bremselementes auf die Oberfläche der Tragrolle optimiert wird. Hierdurch ist ein schnelles und leises Abbremsen der Fördergüter möglich.

Um eine derartige Anstellbewegung für die Bremselemente zu erhalten, eignen sich vorzugsweise auf Tragelementen angeordnete Bremselemente, die über einen Exzenterantrieb zunächst erst weitgehend in Richtung der Oberfläche der Tragrolle und anschließend weitgehend tangential zur Oberfläche der Tragrolle sowie in deren Drehrichtung bewegt werden. Im Bereich der tangentialen Bewegung zur Oberfläche der Tragrolle kommt es zu der gewünschten Stauchung des Bremselementes, da sich der Abstand zwischen dem Tragelement und der Tragrollenoberfläche verringert und/oder die wirksame Belagstärke des Bremselementes zunimmt.

Als konstruktiv besonders einfach erweist sich die Ausbildung der Exzenterantriebe aus einer exzentrisch gelagerten Exzenterscheibe, an der radial angreifend ein Hebel befestigt ist, dessen der Exzenterscheibe abgewandtes Ende zum Verdrehen der Exzenterscheibe mit einem insbesondere als Pneumatikzylinder ausgebildeten Linearantriebsmittel verbunden ist. Als bevorzugter Einbauort für die Bremselemente hat sich die Anordnung an der dem Fördergut abgewandten Hälfte und weitgehend an der in Förderrichtung gesehen hinteren Seite der Tragrolle erwiesen, da hierdurch die für den Staucheffekt erforderliche weitgehend tangential zur Tragrollenoberfläche folgende letzte Bewegungsphase vorzugsweise nahezu parallel und entgegen zur Förderrichtung erfolgen kann.

Besonders vorteilhaft ist die Anordnung nur der Bremselemente für zwei in Förderrichtung aufeinanderfolgende Tragrollen auf je einem Tragelement, das als Schwinge ausgebildet ist, die zwischen den Bremselementen für die in Förderrichtung aufeinanderfolgenden Tragrollen an einem Exzenterantrieb schwenkbar gelagert ist. Hierdurch wird erreicht, daß die Bremskraft gleichmäßig auf die Tragrollen verteilt wird und gleichzeitig durch die schwenkbare Lagerung des Tragelementes etwaige Fertigungstoleranzen, die sich in unterschiedlichen Abständen zwischen den Bremselementen und den Oberflächen der Tragrollen niederschlagen, hierdurch ausgeglichen werden. Besonders geeignet ist eine derartig ausgebildete Bremsvorrichtung für Rollen, deren Tragrollen eine geringen Abstand zueinander aufweisen. Hierdurch ist ein schnelles und leises Abbremsen der Fördergüter möglich.

Als besonders vorteilhaft erweist, sich das als Schwinge ausgebildete Tragelement derart auszubilden, daß der Schwerpunkt des Tragelementes zwischen dem Exzenterantrieb und einem an einem Ende des Tragelementes angeordnetem Anschlagelement liegt, so daß in seiner Ruhestellung, in der die Tragrollen ungebremst sind, sich das Tragelement in eine definierte Lage bewegt. In dieser Lage ist das in Förderrichtung hintere und an der dem Anschlagselement abgewandten Ende des Tragelements angeordnete Bremselement mit einem geringerem Abstand zu der Oberfläche der zugeordneten Tragrolle angeordnet als das vordere Bremselement. Hierdurch wird bei Einleitung des Bremsvorganges zunächst nur ein Bremselement der Schwinge in Kontakt mit den Tragrollen gebracht, wodurch eine impulsartige Verschwenkbewegung des Tragelementes hervorgerufen, so daß das zweite Bremselement ebenfalls in Kontakt mit der Oberfläche der Tragrolle kommt und durch die bereits initiierte Schwenkbewegung des Tragelements auch sofort etwaige Abstandstoleranzen ausgeglichen werden können, ohne daß die Schwenkrichtung des Tragelements geändert werden muß. Dadurch wird ein sicheres, schnelles und geräuscharmes Abbremsen erzielt. Um diesen Effekt zu erreichen sind Schwenkbewegungen des Tragelementes zwischen der Ruhe- und der Bremsstellung in einem Bereich von 1° bis 5° ausreichend. Als konstruktiv besonders einfach erweist sich die Ausbildung des Anschlagelementes als Stift, der sich in der Ruhestellung des Tragelementes auf einer Schubleiste abstützt, die unterhalb der Tragrollen und in Förderrichtung verläuft und an der die Hebel der Exzenterantriebe eines Rollenbahnabschnittes sowie ein Linearantriebsmittel für die Schubleiste gelenkig gelagert sind.

Eine weitere Verbesserung der Bremsleistung wird durch die Ausbildung der Öffnung in dem Tragelement als Langloch, dessen Längserstreckung parallel zu der tangentialen Bewegungsrichtung des Tragelementes ausgerichtet ist, erreicht, da hierdurch das Tragelement nach Erfassen des Bremselementes durch die Oberfläche der Tragrolle impulsartig in Drehrichtung, d. h. weitgehend tangential zur Tragrollenoberfläche gezogen wird, bis die Exzenterscheibe an dem anderen Ende des Langloches anliegt. Hierdurch wird der gewünschte Staucheffekt optimiert. Zur Erzielung des Staucheffektes ist vorrichtungsgemäß vorgesehen, daß die der Tragrolle zugewandte Bremsfläche des Bremselementes entgegen der Drehrichtung der Tragrolle gesehen und relativ zu der weitgehend tangentialen Bewegung des Tragelementes gesehen ansteigend ausgebildet ist. Hierdurch wird bei zunehmender Bewegung des Bremselementes in der tangentialen Richtung die Flächenpressung zwischen der Tragrollenoberfläche und dem Tragelement erhöht. Der zwischen der Tragrollen zugewandten Bremsfläche des Bremselementes und der weitgehend tangentialen Bewegungsrichtung des Tragelementes, der in etwa mit der Längserstreckung des Tragelementes übereinstimmt, eingeschlossene Winkel beträgt etwa 5° - 10°. Als Werkstoff für die Bremselemente hat sich Polyurethan-Elastomer als vorteilhaft herausgestellt.

Die Erfindung wird nachfolgend anhand von einem in einer Zeichnung dargestellten Ausführungsbeispiel näher beschrieben. Die Rollenbahnen sind hierbei als Staurollenbahnen mit angetriebenen Tragrollen ausgebildet. Eine Ausbildung der Rollenbahnen als Gefällerollenbahnen mit antriebslosen Tragrollen ist auch möglich. Es zeigen:
- Figur 1: eine Seitenansicht eines Abschnittes einer Staurollenbahn mit Tragrollen im ungebremsten Zustand mit einem als Schwinge ausgebildeten Tragelement,
- Figur 2: eine Seitenansicht gemäß Figur 1 mit Tragrollen im gebremsten Zustand und
- Figur 3: eine Schnittansicht von Figur 1 und 4 entlang der Schnittlinie I - I.

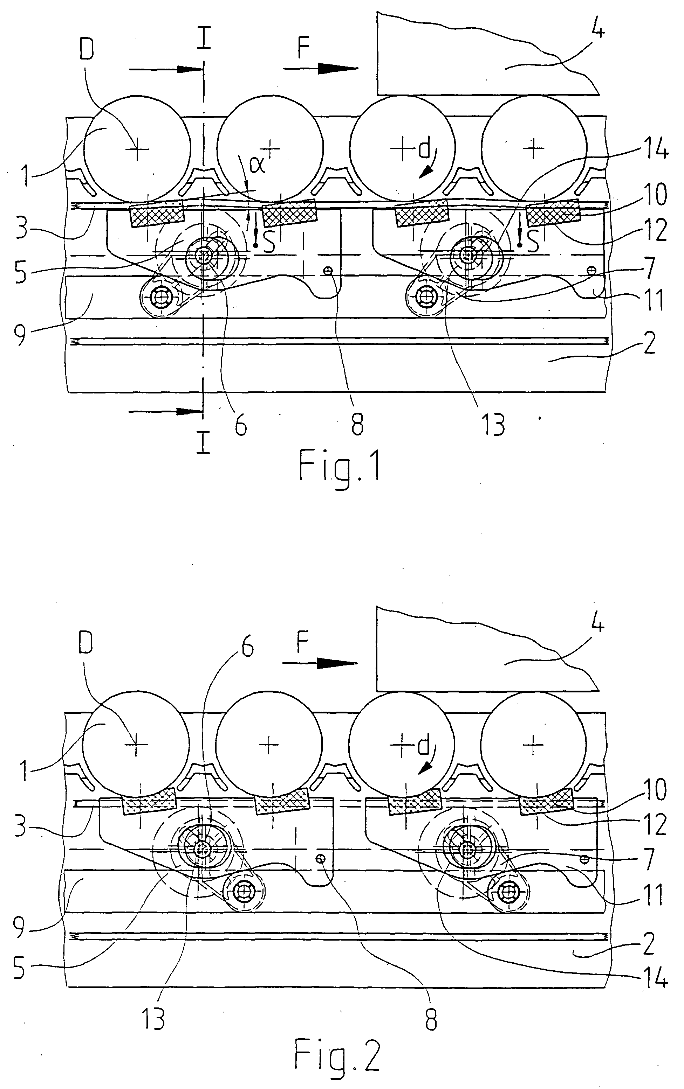

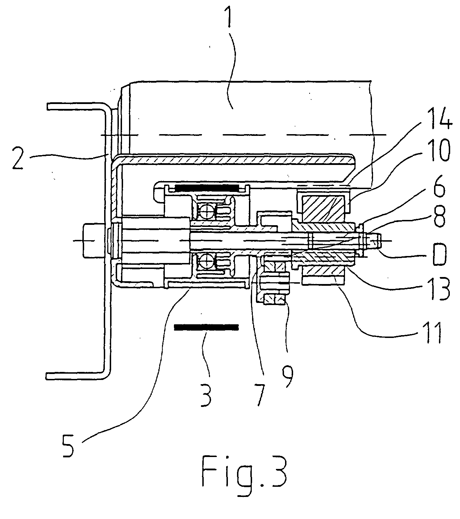

Die Figur 1 zeigt eine Seitenansicht eines Abschnittes einer Staurollenbahn mit Tragrollen 1 im ungebremsten Zustand. Die Staurollenbahn besteht im wesentlichen aus zwei U-förmigen Längsträgern 2 (siehe Figur 3), deren offene Seiten voneinander abgewandt sind. Zwischen sowie an den Stegen der Längsträger 2 sind die Tragrollen 1 gelagert, die eine ebene Auflagefläche für das Fördergut 4 bilden und deren Drehachsen D quer zur Förderrichtung F sowie horizontal verlaufen.

Jede Tragrolle 1 ist über einen als Flachgurt ausgebildeten Antriebsgurt 3 in Drehrichtung d antreibbar. Hierzu ist der Antriebsgurt 3 endlos umlaufend ausgebildet, wobei das obere Trum von unten an die Tragrollen 1 anliegend (siehe Figur 3) die Tragrollen 1 über Reibschluß mitnimmt. Dieser Reibschluß zwischen dem Antriebsgurt 3 und den Tragrollen 1 wird durch Anheben des Obertrums des Antriebsgurtes 3 in Richtung der Tragrollen 1 über Stützrollen 5 erreicht, die in Förderrichtung F gesehen, jeweils zwischen den aufeinanderfolgenden Tragrollen 1 angeordnet sind und somit im angehobenen Zustand über das Niveau der von den Tragrollen 1 gebildeten unteren Begrenzungsebene hinaus angehoben werden können. Hierdurch wird ein in Seitenansicht gesehen wellenförmiger Verlauf des Antriebsgurtes 3 erreicht und somit durch die vergrößerte Umschlingung der Tragrollen 1 eine optimierte Übertragung der Antriebsleistung erreicht.

Die für die Übertragung der Antriebskräfte bzw. deren Unterbrechung erforderlichen Hub- und Senkbewegungen der Stützrollen 5 erfolgen über einen Exzenterantrieb, der im wesentlichen aus einer exzentrischen Lagerung der Stützrollen 5 auf einer Achse 6 und einen radial zur Achse 6 der Stützrollen 5 verlaufenden sowie mit den Stützrollen 5 verbundenen Hebel 7 besteht. An dem der Stützrolle 5 abgewandten Ende des Hebels 7 greift ein als Pneumatikzylinder ausgebildetes und in der Zeichnung nicht dargestelltes Linearantriebsmittel angreift.

Da die Staurollenbahn zum staudrucklosen Anhalten des Fördergutes 4 in getrennt voneinander antreib- und bremsbare Abschnitte unterteilt ist, deren Länge an das zu fördernde Fördergut 4 angepaßt ist, sind die Stützrollen 5 eines Staurollenbahnabschnittes über ein gemeinsames Linearantriebsmittel heb- und senkbar. Hierzu sind die jeweiligen Hebel 7 der Stützrollen 5 mit Ihren Enden gelenkig an einer im wesentlichen in bzw. gegen Förderrichtung F bewegbaren Schubleiste 9 angelenkt sind, die ihrerseits über das Linearantriebsmittel bewegbar ist.

Zum Abbremsen des Fördergutes 4 ist jede Tragrolle 1 über ein Bremselement 10 anhaltbar, das quaderförmig ausgebildet und aus Polyurethan-Elastomer hergestellt ist. Die Bremselemente 10 für zwei in Förderrichtung F aufeinanderfolgende Tragrollen 1 eines Staurollenabschnittes sind jeweils auf einem gemeinsamen Tragelement 11, das als in Förderrichtung F verlaufende Schwinge ausgebildet ist, angeordnet. Die Befestigung der beiden Bremselemente 10 auf dem Tragelement 11 erfolgt formschlüssig in Aussparungen 12 auf der Oberseite des Tragelementes 11, die zu der Form der Bremselemente 10 korrespondieren. Zum Anlegen der Bremselemente 10 an die Oberflächen der Tragrollen 1 ist das Tragelement 11 ebenfalls über einen Exzenterantrieb heb- und senkbar ausgebildet.

Der Exzenterantrieb besteht im wesentlichen jeweils aus einer Exzenterscheibe 13, die exzentrisch auf der Achse 6 gelagert ist und über den Hebel 7 der Stützrolle 5 verschwenkbar ist. Auf der Exzenterscheibe 13 ist das als Schwinge ausgebildete Tragelement 11 in einer korrespondierend ausgebildeten Öffnung 14 schwenkbar gelagert und die Exzenterscheibe 13 ist in Förderrichtung gesehen zwischen den Tragrollen 1 angeordnet. Die Schwenkbewegung des Tragelements 11 ist in der von den Tragrollen 1 wegbewegten Ruhestellung durch ein Anschlagelement 8, das als Stift ausgebildet ist, begrenzt. In der Ruhestellung liegt hierzu das Anschlagelement 8 auf der Schubleiste 9 auf, da der Schwerpunkt S des Tragelements 11 zwischen dem Anschlagelement 8 und dessen Öffnung 14 liegt. Das Tragelement 11 kippt daher auch selbsttätig nach Lösen der Bremselemente 10 von den Tragrollen 1 in die Ruhestellung. Durch diesen Exzenterantrieb sind die Tragelemente 11 mit den Bremselementen 10 zunächst weitgehend in Richtung der Oberflächen der Tragrollen 1 bewegbar. Da das Tragelement 11 in der Ruhestellung in Förderrichtung F gesehen leicht nach vorne gekippt angeordnet ist, wird zunächst das hintere Bremselement 10 an die Tragrolle 1 angestellt und hierdurch das Tragelement 11 um die Achse 6 verschwenkt, wodurch auch das vordere Bremselement 10 an die vordere Tragrolle 1 angelegt wird. Mit zunehmender Anstellbewegung werden die Bremselemente immer mehr in eine tangential zur Oberfläche der Tragrollen 1 sowie in deren Drehrichtung verlaufende Richtung bewegt, so daß im letzten Bereich der Anstellbewegung die Bremselemente 10 zwischen den Oberflächen der Tragrollen 1 und dem Tragelement 11 eingeklemmt werden. Hierdurch wird die Anpreßkraft der Bremselemente 10 an die Oberfläche der Tragrollen 1 wirksam erhöht.

Das Einklemmen bzw. Stauchen der Bremselemente 10 wird dadurch hervorgerufen, daß in Richtung der weitgehend tangential zur Oberfläche der Tragrollen 1 verlaufenden Anstellbewegung der Bremselemente 10, die im vorliegendem Fall weitgehend horizontal ist, die der Tragrollen 1 zugewandte Oberfläche der Bremselemente 10 zur Tragrolle 1 hin geneigt ist. Im vorliegenden Fall beträgt der zwischen der Oberfläche der Bremselemente 10 und der im letzten Abschnitt der Anstellbewegung weitgehend tangential zur Oberfläche der Tragrollen 1 verlaufenden Bewegungsrichtung eingeschlossene Winkel α 5° - 10°, vorzugsweise 7°. Diese Randbedingungen werden u. a. dadurch geschaffen, daß die Bremselemente 10 bei horizontal verlaufender Staurollenbahn gesehen von unten sowie in Förderrichtung F gesehen von hinten an die Tragrollen 1 anstellbar sind. Außerdem wird die Bremswirkung durch die Anstellung der Bremselemente 10 in Drehrichtung der jeweiligen Tragrolle 1 durch eine Art Mitnahmeeffekt für das Bremselement 10 begünstigt, da hierdurch die Klemmwirkung erhöht wird.

Eine Optimierung des Staucheffektes des Bremselementes wird durch eine Verlängerung des letzten Bewegungsabschnittes erreicht. Hierzu ist das Tragelement 11 für die Bremselemente 10 zusätzlich in und gegen die weitgehend tangentiale Anstellbewegungsrichtung der Bremselemente 10 verschiebbar, d. h. in bzw. gegen Förderrichtung F auf der Exzenterscheibe 13 verschiebbar. Die verschiebbare Lagerung ist durch eine als Langloch ausgebildete Öffnung 14 des Tragelements 11 verwirklicht, deren Längserstreckung in bzw. gegen Förderrichtung F ausgerichtet ist. Die Bewegung des Tragelementes 11 nach erfolgtem Bremsvorgang in Förderrichtung F zurück in seine Ruhestellung, erfolgt einerseits durch die Drehbewegung der Exzenterscheiben 13 und andererseits durch den horizontalen Anteil der Bremskraft der Bremselemente 10. Hierdurch befindet sich das Tragelement 11 in seiner Ruhestellung und somit im ungebremsten Zustand der Staurollenbahn in einer definierten Ausgangslage auf den Exzenterscheiben 13.

Nachfolgend wird anhand der Figuren 1 und 2, die jeweils eine Seitenansicht eines Abschnittes einer Staurollenbahn mit Tragrollen 1 im ungebremsten (siehe Figur 1) sowie im gebremsten Zustand (siehe Figur 2) zeigen, ein Abbremsvorgang des Fördergutes 4 näher erläutert. Ausgehend von der Ruhestellung des Tragelementes 11 gemäß Figur 1, in der die Tragrollen 1 über den Antriebsgurt 3 angetrieben werden und die Bremselemente 10 von den Tragrollen 1 abgehoben sind, wird zur Einleitung des Abbremsvorganges über das Linearantriebsmittel die Schubleiste 9 in Förderrichtung F verschoben. Hierdurch werden über die Hebel 7 die Stützrollen 5 sowie die Exzenterscheiben 13 (siehe insbesondere Figur 3) auf ihren gemeinsamen Achsen 6 verdreht, wodurch die Stützrollen 5 von den Tragrollen 1 weg und das Tragelement 11 mit den Bremselementen 10 auf einer kreisbogenförmigen Bahn zu den Oberflächen der Tragrollen 1 hin bewegt werden. Auf dieser kreisbogenförmigen Bahn werden die Bremselemente 10 bei einer waagerecht verlaufenden Staurollenbahn gesehen etwa 3 mm senkrecht nach oben sowie etwa 1 mm entgegen der Förderrichtung F bewegt. Zu dem Zeitpunkt, an dem das hintere Bremselement 10 den ersten Kontakt mit der Oberfläche jeder Tragrolle 1 hat, wird das Tragelement 11 leicht verschwenkt, das vordere Bremselement 10 legt sich an die zugeordnete Tragrolle 1 an und die Bremselemente 10 werden von den Tragrollen 1 über Reibschluß in deren Drehrichtung mitgenommen, wodurch das Tragelement 11 in seinen als Langloch ausgebildeten Öffnungen 14 schlagartig entgegen der Förderrichtung F auf den Exzenterscheiben 13 um etwa weitere 3 mm verschoben. Da die Bremselemente 10 derartig ausgebildet sind, daß diese die Wirkung von Keilen haben, wird durch die zusätzliche Schubbewegung des Tragelementes 11 die Anpreßkraft zwischen den Bremselementen 10 und den Oberflächen der Tragrollen 1 erhöht. Für die Anstellbewegung des Tragelementes 10 werden die Hebel 7 auf der Achse 6 in etwa um 90° über die Schubleiste 9 verschenkt.

Zum Lösen der Bremselemente 10 von den Tragrollen 1 werden die Exzenterscheiben 13 in entgegengesetzter Richtung verdreht. Somit werden die Bremselemente 10 auf der kreisbogenförmigen Bahn wieder von den Tragrollen 1 gelöst und das Tragelement 11 gleitet auf den Exzenterscheiben 13 in Ihren als Langloch ausgebildeten Öffnungen 14 in Förderrichtung F. Diese Bewegung wird über die Reibungskraft zwischen den Exzenterscheiben 13 und der Öffnung 14 sowie die horizontale Komponente der Bremskraft bewirkt.

Ferner ist der Figur 3, die einen Schnitt durch die Figur 1 und 4 entlang der Schnittlinie I - I zeigt, zu entnehmen, daß die Exzenterscheiben 13 und die Stützrollen 5 auf einer gemeinsamen Achse 6 gelagert und über jeweils einen gemeinsamen Hebel 7 auf der Achse drehbar sind.

## Patentansprüche

1. Rollenbahn mit Tragrollen für das Fördergut und durch Verstellmittel an die Tragrollen anlegbaren und von diesen lösbaren Bremselementen für die Tragrollen, die sich an Tragelementen abstützen, wobei die Bremselemente (10) zum Abbremsen der Tragrollen (1) jeweils auf einer vorgegebenen Bewegungsbahn in Drehrichtung (d) der Tragrollen (1) und gegen deren Oberfläche derartig bewegbar sind, daß die Bremselemente (10) zwischen der Oberfläche der Tragrolle (1) und dem Tragelement (11) gestaucht werden,
dadurch gekennzeichnet,
daß die Bremselemente (10) für zwei in Förderrichtung aufeinanderfolgende Tragrollen (1) auf je einem Tragelement (11) befestigt sind, das als Schwinge ausgebildet ist und die Schwinge zwischen den Bremselementen (10) schwenkbar gelagert ist.

2. Rollenbahn nach Anspruch 1,
dadurch gekennzeichnet,
daß die Bremselemente (10) auf den Tragelementen (11) befestigt sind, die über einen Exzenterantrieb zum Abbremsen der Tragrollen (11) bewegbar sind, der Exzenterantrieb im wesentlichen aus einer Exzenterscheibe (13) und einen hieran radial angreifenden Hebel (7) besteht, dessen der Exzenterscheibe (13) abgewandtes Ende zum Verdrehen der Exzenterscheibe (13) mit einem Linearantriebsmittel verbunden ist und in dem Tragelement (11) eine Öffnung (14) zur Aufnahme der Exzenterscheibe (13) angeordnet ist.

3. Rollenbahn nach Anspruch 2,
dadurch gekennzeichnet,
daß die Schwinge an dem Exzenterantrieb gelagert und über diesen die Bremselemente (10) zum Abbremsen der Tragrollen (1) zunächst weitgehend in Richtung der Oberfläche der Tragrolle (1) und anschließend weitgehend tangential zur Oberfläche der Tragrolle (1) bewegbar sind.

4. Rollenbahn nach Anspruch 3,
dadurch gekennzeichnet,
daß die Schwenkbewegung des Tragelements (11) in einer Richtung durch ein Anschlagelement (8) begrenzt ist und der Schwerpunkt (S) des Tragelements (11) zwischen dem Anschlagelement (8) und dem Exzenterantrieb liegt, so daß das Tragelement (11) in seiner Ruhestellung, in der die Tragrollen (11) ungebremst sind, um den Exzenterantrieb in Richtung des Anschlagelements (8) verschwenkt ist und das in Förderichtung (F) hintere und an der dem Anschlagelement (8) abgewandten Ende des Tragelements (11) angeordnete Bremselement (10) einen geringeren Abstand zu der zugeordneten Oberfläche der Tragrolle (11) aufweist als das Bremselement (10) auf der gegenüberliegenden Seite des Tragelements (11).

5. Rollenbahn nach Anspruch 4,
dadurch gekennzeichnet,
daß das Anschlagelement (8) als Stift ausgebildet ist, der sich in der Ruhestellung des Tragelements (11) auf einer Schubleiste (9) abstützt, die unterhalb der Tragrollen (1) und in Förderrichtung (F) verläuft und an der die Hebel (7) der Exzenterantriebe eines Staurollenbahnabschnittes sowie ein Linearantriebsmittel gelenkig gelagert sind.

6. Rollenbahn nach Anspruch 4 oder 5,
dadurch gekennzeichnet,
daß die Schwenkbewegung des Tragelements (11) zwischen der Ruhestellung und der Bremsstellung im Bereich zwischen 0,5° und 5° liegt.

7. Rollenbahn nach einem der Ansprüche 1 bis 6,
dadurch gekennzeichnet,
daß die weitgehend tangential verlaufende Bewegung der Bremselemente (10) parallel zur Förderrichtung (F) gerichtet ist.

8. Rollenbahn nach einem der Ansprüche 2 bis 7,
dadurch gekennzeichnet
daß jede Öffnung (14) in dem Tragelement (11) als Langloch ausgebildet ist, das mit seiner Längserstreckung parallel zur tangentialen Bewegungsrichtung des Tragelements (11) ausgerichtet ist, und das Tragelement (11) über ein an der Exzenterscheibe (13) angreifendes Federelement (8) in Förderrichtung vorgespannt ist.

9. Rollenbahn nach einem der Ansprüche 1 bis 8,
dadurch gekennzeichnet,
daß die Bremselemente (10) jeweils an der dem Fördergut (4) abgewandten Hälfte der Tragrollen (1) und weitgehend an die in Förderrichtung (F) gesehen hintere Seite der Tragrollen (1) anlegbar sind.

10. Rollenbahn nach einem der Ansprüche 1 bis 9,
dadurch gekennzeichnet,
daß die der Tragrolle (11) zugewandte Bremsfläche des Bremselements (10) gegen die Drehrichtung (d) der Tragrolle (1) und relativ zu der weitgehend tangentialen Bewegung des Tragelements (11) gesehen ansteigt.

11. Rollenbahn nach Anspruch 10,
dadurch gekennzeichnet,
daß der zwischen der der Tragrolle (1) zugewandten Bremsfläche des Bremselements (10) und zu der weitgehend tangentialen Bewegungsrichtung des Tragelements (11) eingeschlossene Winkel (α) etwa zwischen 5° und 10° beträgt.

12. Rollenbahn nach einem der Ansprüche 1 bis 113,
dadurch gekennzeichnet,
daß die Bremselemente (10) aus Polyurethan-Elastomer hergestellt sind.

## Claims

1. Roller conveyor with support rollers for the goods to be conveyed and with brake elements (for the support rollers bearing on the support elements) which can be applied to the support rollers and removed therefrom by actuators, wherein the brake elements (10) for braking the support rollers (1) are movable along a respective specified path of motion in the direction of rotation (d) of the support rollers (1) and against their surface in such a manner that the brake elements (10) are upended between the surface of the support roller (1) and the support element (11), characterised in that the brake elements (10) for two support rollers (1) which are consecutive in the conveying direction are each fixed to a respective support element (11), which is formed as a rocker, and the rocker is mounted pivotably between the brake elements (10).

2. Roller conveyor according to claim 1, characterised in that the brake elements (10) are fixed on the support elements (11), which are movable via a cam drive for braking of the support rollers (11), the cam drive consists essentially of a cam disc (13) and a lever (7) acting radially thereon, whose end remote from the cam disc (13) is connected to a linear drive means for rotating the cam disc (13), and an aperture (14) for receiving the cam disc (13) is disposed in the support element (11).

3. Roller conveyor according to claim 2, characterised in that the rocker is mounted on the cam drive and via the same the braking elements (10) for braking the support rollers (1) are movable first substantially in the direction of the surface of the support roller (1) and then substantially tangentially to the surface of the support roller (1).

4. Roller conveyor according to claim 3, characterised in that the pivoting motion of the support element (11) in one direction is limited by a stop element (8) and the centre of gravity (S) of the support element (11) lies between the stop element (8) and the cam drive, so that the support element (11), in its rest position in which the support rollers (11) are unbraked, is pivoted about the cam drive in the direction of the stop element (8) and the brake element (10) disposed at the rear in the conveying direction (F) and on the end of the support element (11) remote from the stop element (8) has a smaller distance from the associated surface of the support roller (11) than the brake element (10) on the opposite side of the support element (11).

5. Roller conveyor according to claim 4, characterised in that the stop element (8) is formed as a pin, which in the rest position of the support element (11) bears on a thrust strip (9), which extends under the support rollers (1) and in the conveying direction (F) and on which the levers (7) of the cam drives of a retarding section of the roller conveyor and a linear drive means are pivotably mounted.

6. Roller conveyor according to claim 4 or 5, characterised in that the pivoting motion of the support element (11) lies between the rest position and the braking position in the range between 0.5 ° and 5°.

7. Roller conveyor according to one of claims 1 to 6, characterised in that the substantially tangential movement of the brake elements (10) is oriented parallel to the conveying direction (F).

8. Roller conveyor according to one of claims 2 to 7, characterised in that each aperture (14) in the support element (11) takes the form of a slot, whose longitudinal extent is oriented parallel to the tangential direction of motion of the support element (11), and the support element (11) is prestressed in the conveying direction via a spring element (8) acting on the cam disc (13).

9. Roller conveyor according to one of claims 1 to 8, characterised in that the brake elements (10) are applicable respectively to the half of the support rollers (1) remote from the goods (4) and substantially on the rear side, viewed in the conveying direction (F), of the support rollers (1).

10. Roller conveyor according to one of claims 1 to 9, characterised in that the brake surface of the brake element (10) associated with the support roller (11) rises viewed in the direction opposite to rotation (d) of the support roller (1) and relative to the substantially tangential movement of the support element (11).

11. Roller conveyor according to claim 10, characterised in that the angle (α) included between the brake surface of the brake element (10) associated with the support roller (1) and to the substantially tangential direction of motion of the support element (11) is approximately between 5 ° and 10°.

12. Roller conveyor according to one of claims 1 to 11, characterised in that the brake elements (10) are manufactured from polyurethane elastomer.

## Revendications

1. Transporteur à rouleaux comportant des rouleaux de support pour les objets transportés et des éléments de freinage pour les rouleaux de support, pouvant être appliqués contre les rouleaux de support par des moyens de réglage et être libérés de ceux-ci, éléments qui s'appuient contre des éléments de support, les éléments de freinage (10), pour le freinage des rouleaux de support (1), étant à chaque fois déplaçables sur une voie de déplacement prédéfinie dans le sens de rotation (d) des rouleaux de support (1) et contre leur surface, de sorte que les éléments de freinage (10) sont comprimés entre la surface du rouleau de support (1) et l'élément de support (11),
caractérisé en ce que les éléments de freinage (10) pour deux rouleaux de support (1) successifs dans la direction de transport sont fixés, à chaque fois, sur un élément de support (11) qui est réalisé comme pièce oscillante, et la pièce oscillante est montée de façon pivotante entre les éléments de freinage (10).

2. Transporteur à rouleaux selon la revendication 1,
caractérisé en ce que les éléments de freinage (10) sont fixés sur les éléments de support (11), qui sont déplaçables par l'intermédiaire d'un entraînement excentrique pour freiner les rouleaux de support (1), l'entraînement excentrique est constitué généralement d'un disque d'excentrique (13) et d'un levier (7) s'engageant radialement sur celui-ci, dont l'extrémité opposée au disque d'excentrique (13), pour tourner le disque d'excentrique (13), est reliée à un moyen d'entraînement linéaire et, dans l'élément de support (11), il est agencé une ouverture (14) pour recevoir le disque d'excentrique (13).

3. Transporteur à rouleaux selon la revendication 2,
caractérisé en ce que la pièce oscillante est montée sur l'entraînement excentrique et, grâce à celui-ci, les éléments de freinage (10) pour freiner les rouleaux de support (1) peuvent être déplacés tout d'abord généralement en direction de la surface du rouleau de support (1) et ensuite généralement tangentiellement à la surface du rouleau de support (1).

4. Transporteur à rouleaux selon la revendication 3,
caractérisé en ce que le mouvement de pivotement de l'élément de support (11) est limité dans une direction par un élément de butée (8) et le centre de gravité (S) de l'élément de support (11) se trouve entre l'élément de butée (8) et l'entraînement excentrique, de sorte que l'élément de support (11), dans sa position de repos dans laquelle les rouleaux de support (1) ne sont pas freinés, est pivoté autour de l'entraînement excentrique en direction de l'élément de butée (8), et l'élément de freinage (10) arrière dans la direction de transport (F) et agencé à l'extrémité de l'élément de support (11) opposée à l'élément de butée (8) présente un plus faible écartement par rapport à la surface associée du rouleau de support (1) que l'élément de freinage (10) sur le côté opposé de l'élément de support (11).

5. Transporteur à rouleaux selon la revendication 4,
caractérisé en ce que l'élément de butée (8) est réalisé sous forme de goupille qui s'appuie dans la position de repos de l'élément de support (11), sur une barrette de poussée (9) qui s'étend au-dessous des rouleaux de support (1) et dans la direction de transport (F) et sur laquelle les leviers (7) des entraînements excentriques d'un tronçon du transporteur à rouleaux d'accumulation, ainsi qu'un moyen d'entraînement linéaire, sont montés de façon articulée.

6. Transporteur à rouleaux selon la revendication 4 ou 5,
caractérisé en ce que le mouvement de pivotement de l'élément de support (11) entre la position de repos et la position de freinage se trouve dans la plage entre 0,5° et 5°.

7. Transporteur à rouleaux selon une des revendications 1 à 6,
caractérisé en ce que le mouvement, s'étendant généralement tangentiellement, des éléments de freinage (10) est orienté parallèlement à la direction de transport (F).

8. Transporteur à rouleaux selon une des revendications 2 à 7,
caractérisé en ce que chaque ouverture (14) dans l'élément de support (11) est réalisée comme trou oblong dont l'extension longitudinale est orientée parallèlement à la direction de déplacement tangentielle de l'élément de support (11), et l'élément de support (11) est précontraint dans la direction de transport par l'intermédiaire d'un élément élastique (8) engageant le disque d'excentrique (13).

9. Transporteur à rouleaux selon une des revendications 1 à 8,
caractérisé en ce que les éléments de freinage (10) peuvent s'appuyer, à chaque fois, contre la moitié, opposée aux objets transportés (4), des rouleaux de support (1) et généralement contre la face arrière dans la direction de transport (F) des rouleaux de support (1).

10. Transporteur à rouleaux selon une des revendications 1 à 9,
caractérisé en ce que la surface de freinage, en regard du rouleau de support (1), de l'élément de freinage (10) monte à l'encontre du sens de rotation (d) du rouleau de support (1) et relativement au déplacement généralement tangentiel de l'élément de support (11).

11. Transporteur à rouleaux selon la revendication 10,
caractérisé en ce que l'angle (α) défini entre la surface de freinage, en regard du rouleau de support (1), de l'élément de freinage (10) et la direction de déplacement généralement tangentielle de l'élément de support (11) vaut environ entre 5 et 10°.

12. Transporteur à rouleaux selon une des revendications 1 à 11,
caractérisé en ce que les éléments de freinage (10) sont fabriqués en élastomère de polyuréthane.
